# EUROPEAN PATENT APPLICATION

(11) **EP 4 779 825 A1**
(43) Date of publication of application: **22.07.2026**
(21) Application number: 24865582.1
(22) Date of filing: 13.09.2024
(51) Int. Cl.: H02G 15/02, H01R 9/05, H01R 43/02, H02G 1/14

(54) **CABLE ASSEMBLY, METHOD FOR MANUFACTURING ELECTRONIC APPARATUS USING SAME, AND ELECTRONIC APPARATUS**

(30) Priority: 15.09.2023 JP 2023150560
(71) Applicant: Junkosha Inc., Kasama-shi, Ibaraki 309-1603 (JP)
(72) Inventor: OIWA Akihiro, Kasama-shi Ibaraki 309-1603 (JP)
(74) Representative: Daub, Thomas
(86) International application number: PCT/JP2024/032997
(87) International publication number: WO 2025/058083

(57) **Abstract**

An object of the present invention is to provide a cable assembly having excellent connection reliability by a simple method in connection between conductors of a plurality of core wires and electrodes of a connection target member. The object of the present invention can be achieved by a cable assembly including a plate and a cable including a plurality of core wires, the cable assembly being capable of connecting the plurality of core wires to a plurality of electrodes provided on a surface of a connection target member, in which the core wire includes a conductor and an insulator formed on an outer periphery of the conductor, and has a conductor exposed region in which the conductor is exposed and a conductor covered region having the insulator on the outer periphery of the conductor, in which the plate has a first surface and a second surface that have a front and back relationship with each other, in which the first surface is formed with a plurality of grooves extending linearly to which the core wire is connected, in which the groove has a first region in which at least a part of the conductor exposed region of the core wire is sandwiched and a second region in which a conductive connection material is held, in which an effective length W2 in the second region in a direction orthogonal to an extending direction of the groove is larger than an effective length W1 in the first region in the direction orthogonal to the extending direction of the groove, and in which the conductor in the conductor exposed region of the core wire is sandwiched in the first region of the groove of the plate and is fixed by the conductive connection material held in the second region.

## Description

### TECHNICAL FIELD

The present invention relates to a cable assembly including a plate and a cable having a plurality of core wires, a method for manufacturing an electronic apparatus using the cable assembly, and an electronic apparatus.

### BACKGROUND ART

An insulated cable or a coaxial cable used in an electronic apparatus such as a measuring device, a communication device, a medical probe cable, or a micromachine is recently required to have a fairly small outer diameter in order to cope with an increase in wiring density associated with miniaturization and high accuracy of these devices. In response to such a demand, for example, in a coaxial cable, a coaxial cable having a fairly small outer diameter such as 0.16 mm or 0.10 mm is manufactured. In the electronic apparatus described above, a multi-core cable is used in which these ultrafine cables are used as core wires.

When a core wire of such a multi-core cable is connected to electrodes or the like arranged at a high density on a substrate, a conductor of the core wire is fairly thin, an arrangement pitch of the electrodes on the substrate is narrow, and a connection operation between the conductor of the core wire and the electrode is fairly difficult and requires a skilled technique. In the electrical connection between the conductor of the core wire and the electrode, a connection failure such as a short circuit failure or an open circuit failure is likely to occur, and there is a problem in stability of connection quality.

JP2002-95129A discloses a method in which, when a center conductor of an ultrafine coaxial cable is electrically connected to a connection portion provided on a substrate or the like, the center conductor is aligned using a heat ray-transmitting member having an alignment groove, the center conductor is pressed and fixed to an electrode portion of the substrate, and heat rays are supplied through the heat ray-transmitting member having the groove.

JP2010-118318A discloses a technique of electrically connecting a center conductor of a coaxial cable provided on a flexible insulating sheet to an electrode portion of a printed circuit board. It is described that the center conductor is aligned and provided in a groove of the flexible insulating sheet to which an adhesive is applied, and the center conductor is connected to the electrode portion of the printed circuit board by solder or the like so as to face the electrode portion.

### PRIOR ART DOCUMENTS

### PATENT LITERATURE

Patent Literature 1: JP2002-95129A
Patent Literature 2: JP2010-118318A

### SUMMARY OF INVENTION

### PROBLEM TO BE SOLVED BY THE INVENTION

In the techniques described in Patent Literature 1 and Patent Literature 2, it is difficult to make the strength and the contact area of the connection portion uniform in the collective connection of the conductors of the plurality of core wires and the substrate. In these methods, it is necessary to form a connection member by a conductive connection material such as solder on the surface of the connection portion of the substrate in advance. When the structure of the connection portion of the substrate is fine, it is difficult to form a necessary amount of connection member for connection on the surface of the substrate, and connection failure is likely to occur in electrical connection with the conductor of the core wire.

The present invention has been made in view of the above problems, and an object of the present invention is to provide a cable assembly that can perform connection by a simple method and that has excellent connection reliability in connection between conductors of a plurality of core wires and a connection target member.

### MEANS FOR SOLVING THE PROBLEM

In order to achieve the object described above, the configurations described in the claims can be used. For example, a cable assembly according to the present invention is a cable assembly including a plate and a cable including a plurality of core wires, the cable assembly being capable of connecting the plurality of core wires to a plurality of electrodes provided on a surface of a connection target member, in which the core wire includes a conductor and an insulator formed on an outer periphery of the conductor, and has a conductor exposed region in which the conductor is exposed and a conductor covered region having the insulator on the outer periphery of the conductor, in which the plate has a first surface and a second surface that have a front and back relationship with each other, in which the first surface of the plate is formed with a plurality of grooves extending linearly to which the core wire is connected, in which the groove has a first region in which at least a part of the conductor exposed region of the core wire is sandwiched and a second region in which a conductive connection material is held, in which an effective length W2 in the second region in a direction orthogonal to an extending direction of the groove is larger than an effective length W1 in the first region in the direction orthogonal to the extending direction of the groove, and in which the conductor in the conductor exposed region of the core wire is sandwiched in the first region of the groove of the plate and is fixed by the conductive connection material held in the second region.

The second region of the groove may be formed such that the groove is formed to penetrate from the first surface to the second surface of the plate.

The plate may have a recess or a protrusion corresponding to the connection target member on at least one of the first surface and the second surface.

The recess of the plate may be provided by forming a groove in an extending direction of the electrode at a position corresponding to the electrode of the connection target member.

In the cable assembly according to the present invention, an outer diameter of the conductor of the core wire is preferably 0.01 mm to 0.15 mm.

A method for manufacturing an electronic apparatus according to the present invention includes preparing the cable assembly described above and electrically connecting the plurality of core wires to the electrodes of the connection target member.

The method for manufacturing an electronic apparatus described above may further include removing the plate after electrically connecting the plurality of core wires to the electrodes of the connection target member.

It is preferable that the method for manufacturing an electronic apparatus described above further includes connecting, when the plurality of core wires and the electrodes of the connection target member are connected to each other, the core wires and the electrodes of the connection target member such that a portion or an entirety of the electrodes is located between the first surface and the second surface of the plate in the second region of the groove of the plate.

In the method for manufacturing an electronic apparatus described above, a recess in an extending direction of the electrode can be formed at a position of the plate corresponding to the electrode of the connection target member, and a relative position between the plate and the connection target member can be controlled.

An electronic apparatus according to the present invention is an electronic apparatus including a cable assembly including a plate and a cable including a plurality of core wires, the cable assembly being capable of connecting the plurality of core wires to a plurality of electrodes provided on a surface of a connection target member, the electronic apparatus including: the cable assembly in which the core wire includes a conductor and an insulator formed on an outer periphery of the conductor, and has a conductor exposed region in which the conductor is exposed and a conductor covered region having the insulator on the outer periphery of the conductor, in which the plate has a first surface and a second surface that have a front and back relationship with each other, and the first surface of the plate is formed with a plurality of grooves extending linearly to which the core wire is connected, in which the groove has a first region in which at least a part of the conductor exposed region of the core wire is sandwiched and a second region in which a conductive connection material is held, and in which an effective length W2 in the second region in a direction orthogonal to an extending direction of the groove is larger than an effective length W1 in the first region in the direction orthogonal to the extending direction of the groove, and the conductor in the conductor exposed region of the core wire is sandwiched in the first region of the groove of the plate and is fixed by the conductive connection material held in the second region; and the connection target member including the plurality of electrodes to which the plurality of core wires are connected.

The electronic apparatus according to the present invention is preferably a medical endoscope or an ultrasonic diagnostic apparatus.

### EFFECTS OF INVENTION

When the cable assembly according to the present invention is used, the conductors of the plurality of core wires and the connection target member of the electronic apparatus can be connected by a simple method, and highly reliable connection can be attained. By using the cable assembly according to the present invention, it is possible to manufacture an electronic apparatus that is easily connected to high-density electrodes and that has excellent reliability in electrical connection.

### BRIEF DESCRIPTION OF DRAWINGS

[Fig. 1] Fig. 1 is a view showing an example of a cable assembly according to the present invention.
[Fig. 2] Fig. 2 is a schematic cross-sectional view of an end portion of an example of an insulated cable which is a core wire.
[Fig. 3] Fig. 3 is a schematic cross-sectional view of an end portion of an example of a coaxial cable which is a core wire.
[Fig. 4] Fig. 4 is a diagram illustrating the vicinity of an end portion of a core wire of an example of the cable assembly.
[Fig. 5] Fig. 5 is a schematic view of an example of a plate of the cable assembly according to the present invention.
[Fig. 6] Fig. 6 is a diagram illustrating an example of a cross section of the plate.
[Fig. 7] Fig. 7 is a diagram illustrating another example of the cross section of the plate.
[Fig. 8] Fig. 8 is a diagram illustrating an example of the cross section of the plate.
[Fig. 9] Fig. 9 is a diagram illustrating another example of the cross section of the plate.
[Fig. 10] Fig. 10 is a diagram illustrating another example of the cross section of the plate.
[Fig. 11] Fig. 11 is a diagram illustrating another example of the plate.
[Fig. 12] Fig. 12 is a diagram illustrating a state in which conductors are arranged on the plate.
[Fig. 13] Fig. 13 is a diagram illustrating a state in which the conductors are fixed on the plate.
[Fig. 14] Fig. 14 is a diagram illustrating a state in which the cable assembly according to the present invention is provided on an electrode of a substrate.
[Fig. 15] Fig. 15 is a diagram illustrating a state in which the cable assembly according to the present invention is connected to the electrode of the substrate.
[Fig. 16] Fig. 16 is a view illustrating a reinforcing structure of the cable assembly according to the present invention.

### EMBODIMENTS FOR CARRYING OUT THE INVENTION

Hereinafter, a structure of a cable assembly according to an embodiment of the present invention will be described with reference to the drawings. The embodiment to be described later is not intended to limit the technical scope of the present invention, and all combinations of features described in the embodiment are not necessarily essential for the solution means of the invention.

### (Description of Cable Assembly)

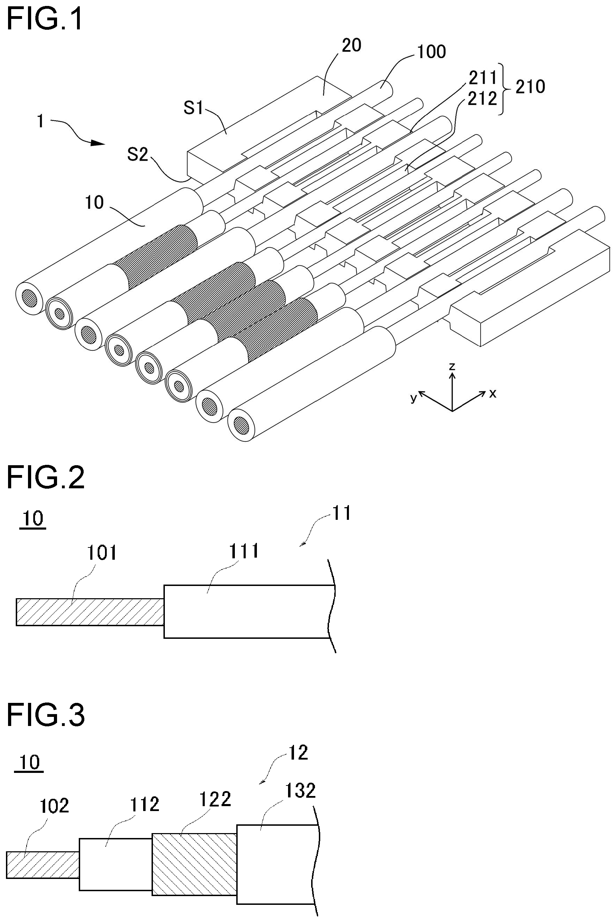

Fig. 1 is a view showing a structure of a cable assembly according to an embodiment of the present invention. A cable assembly 1 includes a cable including a plurality of core wires 10 and a plate 20, and a part of the core wires 10 is fixed to the plate 20. A plurality of grooves 210 extending linearly are formed on a first surface S1 of the plate 20. When the lengths of the plate are described in the orthogonal coordinate system of the x axis, the y axis, and the z axis shown in Fig. 1, the extending direction of the groove 210 formed according to the extending direction of the core wire 10 is the x axis direction, and the direction orthogonal to the extending direction of the groove is the y axis direction.

In the example shown in Fig. 1, the plurality of core wires 10 are arranged in a flat shape according to the arrangement shape of the core wires on the plate in the vicinity of the cable end portion. Although other portions of the cable are not illustrated, the cable may be a multi-core cable having a circular cross section in which a plurality of core wires 10 are twisted together, or may be a multi-core cable having a flat cross section in which a plurality of core wires are arranged in parallel. The end portion of the core wire 10 includes a conductor covered region in which an insulator is formed on the outer periphery of a conductor 100 and a conductor exposed region in which the conductor 100 is exposed. In the conductor exposed region of the core wire, for example, the insulator is removed by a predetermined length to expose the conductor, and the conductor 100 is fixed to the plate 20. In the example in Fig. 1, eight core wires 10 are arranged in parallel on the plate 20, and the number of core wires 10 fixed to one plate 20 is not limited. The groove formed in one plate 20 may be determined according to the number of core wires to be fixed, and the number of core wires 10 to be fixed may be, for example, approximately 1 to 100. The cable assembly 1 according to the present invention is not limited to one including one plate 20 for one cable, and may include a plurality of plates 20 for one cable. The cable assembly 1 may include one plate 20 for a plurality of cables. The number of cables and the number of plates constituting the cable assembly 1 can be set according to the required form of the connection target member.

The core wire 10 includes the conductor 100 and an insulator formed on the outer periphery of the conductor. The core wire 10 may be an insulated cable including only a conductor and an insulator, or may be a coaxial cable in which a shield is further formed on the outer periphery of the insulator. The core wire 10 constituting the cable assembly 1 according to the present invention may be implemented by only an insulated cable or only a coaxial cable, or may be implemented by combining an insulated cable and a coaxial cable. The cable assembly 1 according to the present invention may include a wire other than the insulated cable or the coaxial cable which is a core wire, for example, an uncoated conductor, and the wire may be fixed to the plate 20 together with the core wire. The cable constituting the cable assembly 1 may be a composite cable in which a long body such as a tube is provided together with a core wire, and the core wire 10 fixed to the plate 20 may be a part of the cable. Figs. 2 and 3 are schematic views illustrating a longitudinal cross section of an end portion of the core wire 10, which is an example of the core wire constituting the cable assembly according to the present invention. Fig. 2 illustrates an example of an insulated cable, which is an insulated cable 11. In the insulated cable 11, an insulator 111 is formed on the outer periphery of a conductor 101 having an outer diameter of 0.01 mm to 0.15 mm. Fig. 3 illustrates an example of a coaxial cable, which is a coaxial cable 12. In the coaxial cable 12, an insulator 112 is formed on the outer periphery of a conductor 102 having an outer diameter of 0.01 mm to 0.15 mm, a shield 122 is formed by laterally winding a shield wire on the outer periphery of the insulator 112, and a jacket 132 is formed on the outer side of the shield 122. For the conductors 101 and 102 and the shield 122, a wire generally used as a conductor can be used, and for example, a wire made of copper, silver, aluminum, steel, various alloys, or the like can be used as a material. The surface of such a wire is generally coated with plating such as silver or tin, and for example, a silver-plated copper alloy wire is used. The conductors 101 and 102 may be single wires or twisted wires, or may be parallel to each other without being twisted.

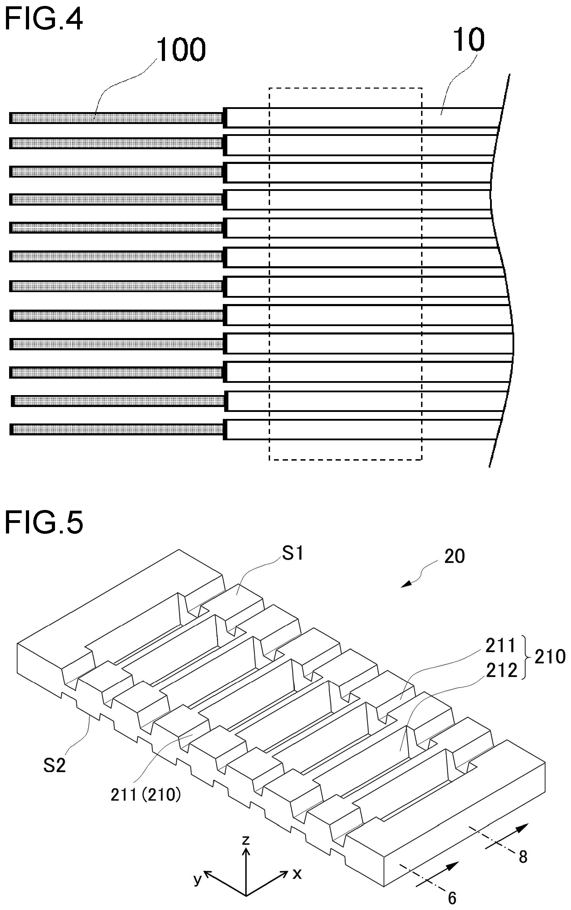

Hereinafter, the structure in the vicinity of the cable end portion that fixes the core wire of the cable assembly according to the present invention to the plate will be described in detail with reference to the drawings. In the cable of the cable assembly according to the present invention, it is preferable that the core wires are arranged according to the shape of the plate in the vicinity of the cable end portion that fixes the core wires to the plate. Fig. 4 illustrates the vicinity of an end portion of an example of the cable, in which the core wires 10 are arranged in a flat shape, and a conductor at a distal end is exposed. This is a state before the core wire 10 of the cable is provided on the plate. The arranged core wires 10 include the conductor 100 in a conductor exposed region where the conductor is exposed, and a conductor covered region having an insulator on the outer periphery of the conductor. At least a part of the conductor 100 in the conductor exposed region is provided in the groove of the plate.

Fig. 5 is an example of the plate 20 of the cable assembly according to the present invention, and is a diagram illustrating an example in which conductors of core wires are arranged in parallel. The structure of the plate will be described based on the example in Fig. 5. A plurality of grooves 210 for fixing the conductor in the conductor exposed region of the core wire are formed on the first surface S1 of the plate 20. Here, the first surface S1 refers to a surface on the plate upper side. The groove 210 linearly extends according to the extending direction of the core wire, and each of the grooves 210 has a first region 211 that sandwiches the conductor 100 in the conductor exposed region of the core wire and a second region 212 that holds a conductive connection material therein. The first region 211 of the groove is formed such that an effective length W1 in the direction (the y axis direction) orthogonal to the extending direction (the x axis direction) of the groove is substantially equal to the conductor outer diameter of the conductor exposed region of the core wire or smaller than the conductor outer diameter of the conductor exposed region of the core wire. When the conductor of the core wire is provided in the groove 210 of the plate, the conductor is sandwiched in the first region 211 of the groove 210, and an effect of preventing the core wire from being detached from the plate is attained. Regarding the effective length of the groove in the y axis direction, an effective length W2 of the groove 210 in the second region 212 is larger than the effective length W1 of the groove 210 in the first region 211. That is, it can be said that the effective length W2 of the second region 212 of the groove in the y axis direction is larger than the conductor outer diameter of the conductor exposed region of the core wire. The conductor of the core wire easily enters the conductive connection material held inside the second region 212 of the groove 210, and can be fixed by the conductive connection material. In the second region 212 of the groove 210, in a state in which half or more of the outer periphery of the conductor is covered with the conductive connection material, the effect of preventing the core wire from being detached from the plate is easily attained.

The plate 20 of the cable assembly according to the present invention is made of an insulating material, and for example, a thin plate-shaped material having a thickness of approximately 0.02 mm to 0.4 mm can be used. The thickness can be appropriately set to approximately 0.03 mm to 0.25 mm according to the hardness of the material or the like. As the insulating material, a material having heat resistance is suitable. For example, a polyimide resin (PI), a polyamide-imide resin (PAI), a polyether ether ketone resin (PEEK), a polyphenylene sulfide resin (PPS), a tetrafluoroethylene-perfluoroalkyl vinyl ether copolymer (PFA), and polytetrafluoroethylene (PTFE) can be used, and the present invention is not limited thereto. The material of the plate 20 preferably has appropriate hardness. A material having appropriate elasticity is preferable. When the conductor of the core wire provided in the groove 210 of the plate 20 is pressed from above the plate 20, the conductor is fitted into the first region 212 of the groove 210, and then the state is easily maintained until the cable assembly is connected to the electrode of the connection target member. If the material of the plate 20 is a material having appropriate elasticity, the plate can be curved and connected even when the surface of the connection target member is a curved surface.

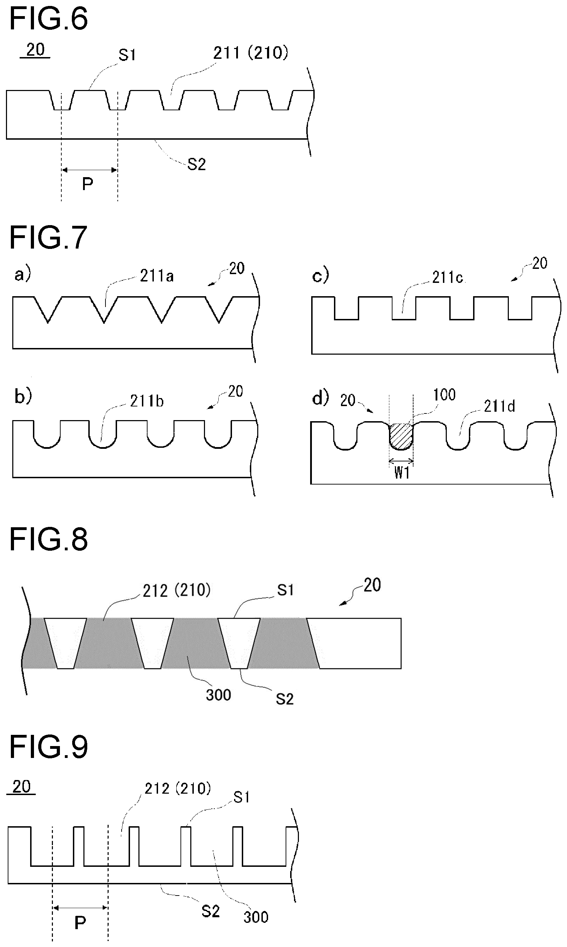

Fig. 6 is a schematic cross-sectional view of an example of the first region 211 of the groove 210 of the plate 20, and shows a cross section (a cross section along the y axis direction) 6 of Fig. 5. Fig. 6 shows an example in which the cross-sectional shape of the first region 211 of the groove 210 of the plate is trapezoidal, and the cross-sectional shape of the groove is not limited thereto. Regarding the relationship between the cross-sectional area of the conductor in the conductor exposed region of the core wire and the cross-sectional area of the first region 211 of the groove 210 in the direction orthogonal to the extending direction of the groove, it is more preferable that the cross-sectional area of the first region 211 of the groove 210 is substantially equal to or slightly larger than the cross-sectional area of the conductor in the conductor exposed region of the core wire. When it is necessary to more firmly fix the conductor in the first region of the groove, an adhesive layer can be provided in the groove. As the adhesive, for example, a thermosetting resin such as an epoxy resin or an ultraviolet curable resin may be used.

Fig. 7 is a schematic cross-sectional view of another example of the first region 211 of the groove 210 of the plate 20. The cross-sectional shape of the first region 211 of the groove 210 is not particularly limited as long as the conductor is easily provided. For example, a V-shaped groove 211a as shown in a) of Fig. 7, a semicircular groove 211b as shown in b) of Fig. 7, or a rectangular groove 211c as shown in c) of Fig. 7 may be used. When the plurality of electrodes of the connection target member are arranged at a high density, in the cross-sectional shape of the first region 211 of the groove 210, the ratio (length in the y axis direction/length in the z axis direction) of the depth (the length in the z axis direction) of the groove to the length (the length in the y axis direction) in the direction orthogonal to the extending direction of the groove is preferably less than 2, and more preferably less than 1.5. When the length of the first region of the groove in the y axis direction changes between the first surface S1 and a second surface S2 of the plate (in the z axis direction), as shown in d) of Fig. 7, a length at which the length of the groove in the y axis direction is maximized in a range (a portion where the conductor and the inner surface of the groove are in contact with each other) in which an effect of sandwiching the conductor between the first surface S1 and the second surface S2 of the plate is attained is defined as the "effective length W1 in the first region" of the groove.

Fig. 8 is a schematic cross-sectional view of an example of the second region 212 of the groove 210 of the plate 20, and is a view showing a cross section (a cross section along the y axis direction) 8 of Fig. 5. Fig. 8 shows an example in which the second region 212 of the groove 210 of the plate is formed to penetrate from the first surface S1 to the second surface S2 of the plate, and the second region of the groove is not limited to penetrating. A conductive connection material 300 is held in the second region 212 of the groove 210 of the plate, and the amount of the conductive connection material can be precisely controlled by the volume of the space in the groove of the second region 212. The volume of the space in the groove of the second region 212 can be adjusted by the length in the x axis direction, the length in the y axis direction, and the depth (the length in the z axis direction) of the groove of the second region 212. When the conductor of the core wire is fixed by the conductive connection material held in the second region 212, the core wire is less likely to be detached from the plate 20.

As in the example in Fig. 8, in a case in which the second region 212 is formed to penetrate from the first surface S1 to the second surface S2, when the plurality of core wires fixed to the plate 20 are connected to the electrode of the connection target member, it is possible to select either the first surface S1 or the second surface S2 of the plate 20 as the surface facing the connection target member. Fig. 9 is a schematic cross-sectional view of another example of the second region 212 of the groove 210 of the plate 20, and the second region 212 is formed without penetrating. In the example in Fig. 9, the surface facing the connection target member may be the first surface S1 of the plate 20.

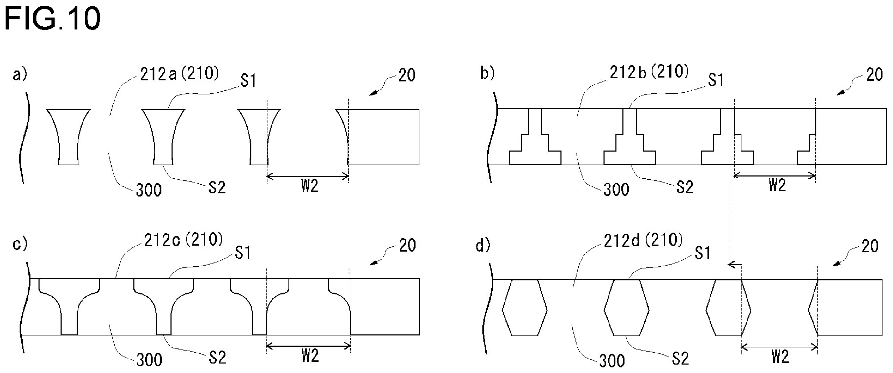

Fig. 8 shows an example in which the cross-sectional shape of the second region 212 of the groove 210 is trapezoidal, and the second region 212 of the groove 210 is formed such that the area (the opening area viewed from above the first surface) on the first surface S1 of the plate is smaller than the area (the opening area viewed from below the second surface) on the second surface S2. When the conductive connection material is solidified in a state in which the conductor of the core wire is covered with the conductive connection material held in the second region 212, the core wire is less likely to be detached from the conductive connection material, but an effect is expected in which the conductive connection material itself is less likely to be detached from the plate 20 due to the anchor effect. Conversely, the area of the second region 212 of the groove 210 on the first surface S1 of the plate may be larger than the area on the second surface S2. In this case, when the plate is removed after the core wire and the electrode are connected by a method to be described later, an effect of facilitating removal of the plate 20 is expected. The cross-sectional shape of the second region 212 of the groove 210 is not limited to the trapezoidal shape or the rectangular shape described above. Fig. 10 is a diagram illustrating still another example of the cross section of the second region 212 of the groove 210 of the plate 20. The shape of the second region 212 is not particularly limited as long as the conductor easily enters the conductive connection material. For example, a groove 212a having a shape in which the inner wall of the second region is formed of a curved surface as shown in a) of Fig. 10, a groove 212b having a shape in which the inner wall of the second region is formed in a stepped shape as shown in b) of Fig. 10, a groove 212c having a shape in which the inner wall of the second region is formed in a bottle shape as shown in c) of Fig. 10, or a groove 212d in which the inside of the second region is thin as shown in d) of Fig. 10 may be used. As shown in Figs. 8 and 10, when the length in the direction (the y axis direction) orthogonal to the extending direction of the groove in the second region of the groove changes between the first surface S1 and the second surface S2 of the plate (in the z axis direction), the length at which the length in the y axis direction in the second region of the groove becomes maximum between the first surface S1 and the second surface S2 of the plate is defined as the "effective length W2 in the second region" of the groove.

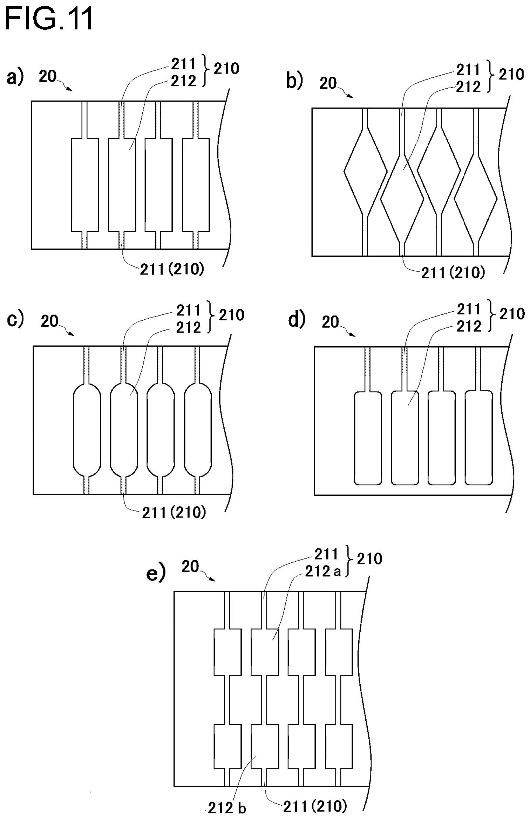

Fig. 11 illustrates an example of the shape of the second region of the groove of the plate 20 viewed from above the first surface S1. The second region 212 of the groove 210 is formed such that the effective length W2 in the direction orthogonal to the extending direction of the groove is larger than the outer diameter of the conductor in the conductor exposed region of the core wire, and even when the outer diameter of the conductor of the core wire is small, a sufficient amount of the conductive connection material for connection to the connection target member can be secured. In the technique according to the present invention, a particularly high effect is attained when a conductor of a thin core wire is connected to electrodes arranged at a narrow pitch. The shape of the second region 212 of the groove 210 on the first surface S1 and the shape of the cross section of the second region 212 of the groove 210 along the y axis direction are not particularly limited as long as the conductor of the core wire can enter the conductive connection material held inside the second region. For example, the shape may be a rectangle, a rhombus, an ellipse, or the like as shown in a) to d) of Fig. 11, or only one first region 211 of the groove 210 may be formed as shown in d) of Fig. 11. As shown in e) of Fig. 11, one groove 210 may have two or more second regions 212. It is possible to connect conductors of different core wires in the second region 212a on the upper side and the second region 212b on the lower side in the drawing, and a connection structure having a two-stage structure or a three-stage structure according to the arrangement of high-density substrate electrodes can be obtained. When the second region of the groove has a shape other than a square as in b) of Fig. 11 or the like, the boundary between the first region and the second region of the groove is set such that the length in the direction orthogonal to the extending direction of the groove is larger than the conductor outer diameter of the conductor exposed region of the core wire.

The arrangement of the second region 212 of the groove 210 of the plate may correspond to the arrangement of the electrode of the connection target member. When the grooves 210 of the plate are arranged in parallel, an interval P of the grooves 210 is a distance between the center of the length of the second region 212 on the surface (in the case of Fig. 9, the first surface S1) of the plate facing the connection target member in the y axis direction and the center of the length of the adjacent grooves in the y axis direction. The interval P between the grooves 210 can be, for example, 0.04 mm to 1.0 mm. The technique according to the present invention can also be applied to a case in which a plurality of electrodes of a connection target member are arranged at a high density, and can also be applied to, for example, a step of connecting the core wire 10 to electrodes arranged at an interval of 0.10 mm, 0.05 mm, or the like on the connection target member.

At least one of the first surface and the second surface of the plate of the cable assembly according to the present invention may be provided with a recess or a protrusion corresponding to a protrusion or a recess formed on the surface of the connection target member on which the electrode is provided. When the conductor of the core wire is connected to the connection target member, it can be used to align the position with the corresponding electrode, and the effect of preventing positional deviation can be attained. When the shape of the electrode of the connection target member is linear, a recess in the extending direction of the electrode can be formed at a position corresponding to the electrode of the connection target member of the plate.

As the conductive connection material held inside the second region 212 of the groove 210 of the plate 20, a material that is cured by heating, ultraviolet irradiation, or the like can be used. In the present invention, when a material whose state before heating is liquid or paste is used, the inside of the second region of the groove is easily filled, and the holding amount is easily adjusted. Examples of the conductive connection material include a solder paste, a silver paste, and a copper paste. In addition, a paste containing a conductive substance such as gold, nickel, lead, or carbon can also be used.

### (Embodiment of Cable Assembly)

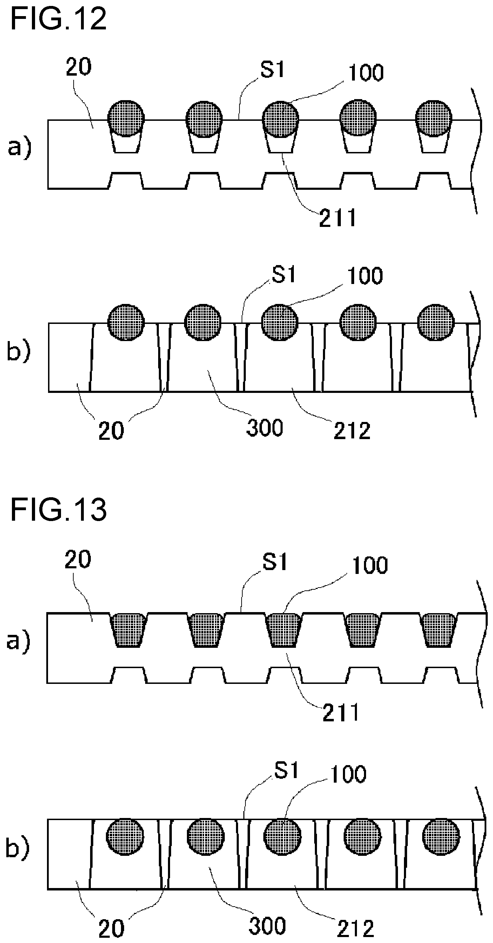

The conductor 100 of the core wire 10 of the cable is provided in the groove 210 formed in the plate 20 described above. Fig. 12 illustrates a state in which the conductors 100 of the core wire 10 are aligned according to the arrangement of the groove 210 of the plate 20. a) of Fig. 12 is a schematic view of a cross section of the first region 211 portion of the groove 210 of the plate 20 along the y axis direction, and the conductor 100 is provided on the first region 211 of the groove 210 of the plate 20. b) of Fig. 12 is a schematic view of a cross section of the second region 212 portion of the groove 210 of the plate 20 along the y axis direction, and the conductor 100 is provided on the conductive connection material 300 held in the second region 212 of the groove 210 of the plate 20.

a) of Fig. 13 shows an example of a method for sandwiching the conductor 100 of the core wire 10 in the plate 20. a) of Fig. 13 is a schematic view of a cross section of the first region 211 of the groove 210 along the y axis direction when the conductor 100 provided in the groove 210 is pressed from above the plate 20 to fit the conductor 100 to the first region 211 of the groove of the plate 20. a) of Fig. 13 shows a cross section at the same position as the cross section in a) of Fig. 12. When the length of the first region 211 of the groove of the plate 20 in the direction orthogonal to the extending direction of the groove is smaller than the outer diameter of the conductor 100 in the conductor exposed region of the core wire, the first region 211 of the groove of the plate 20 and the conductor 100 are easily fitted to each other when the conductor 100 is pressed in the plate direction. After the groove of the plate and the conductor 100 are fitted to each other, the plate is less likely to be detached from the core wire. At this time, the conductor 100 in the second region 212 of the groove of the plate 20 enters the conductive connection material 300 held in the second region 212 (b) of Fig. 13). The conductive connection material can be cured by heating the plate 20 in this state. When the conductive connection material 300 is cured in a state of covering at least a part of the conductor 100, the conductor 100 is fixed to the plate 20. The structure in which the conductors of the plurality of core wires are fixed to and integrated with the plate can be collectively connected only by heating corresponding to the electrode of the connection target member.

Fig. 16 is an example in which a portion is reinforced. In this portion, the end portion of the core wire of the cable is fixed to and integrated with the plate. The plate 20 may further have a third region 213 for holding the arrangement of the cables in addition to the first region 211 and the second region 212 of the groove. A pad such as a copper foil may be provided on the upper surface of the plate to which the conductor 100 of the core wire 10 is fixed so as to cover the groove and the conductor. This not only strengthens the fixed state of the plate and the conductor, but also strengthens the connection surface between the conductor and the electrode. By coating the surface of the copper foil pad with gold plating or silver plating, further strengthening of the connection surface can be expected. A case in which fitting to a connector or coming into contact by a probe pin is required can be handled in the same manner as a normal substrate. Similarly, it is also possible to perform covering with an anisotropic conductive sheet instead of the copper foil pad, and in the case of covering with an anisotropic conductive sheet, it is possible to collectively connect the conductor and the electrode by applying heat and pressure.

### (Method for Connecting Cable Assembly)

Fig. 13 illustrates a state in which the conductor 100 of the core wire 10 is fixed to the plate 20. When the second region 212 of the groove of the plate has a penetrating structure as in the example in Fig. 13, the surface facing the connection target member when the core wire and the electrode of the connection target member are connected may be either the first surface S1 or the second surface S2 of the plate. When an insulating material having appropriate hardness is selected as the material of the plate 20, a uniform contact state is easily attained collectively between the plurality of conductors and the electrodes, which is advantageous for stable connection. In the present invention, "connection" means that the conductor of the core wire and the electrode of the connection target member are connected via the conductive connection material held inside the second region of the groove of the plate, and also means not only electrical connection but also physical connection. As in the example in Fig. 9, when the second region 212 of the groove of the plate 20 has a structure that does not penetrate from the first surface S1 to the second surface S2 of the plate 20, the surface facing the connection target member when the core wire and the electrode of the connection target member are connected is the first surface S1 of the plate, and the conductor 100 and the electrode can be directly connected so as to face each other.

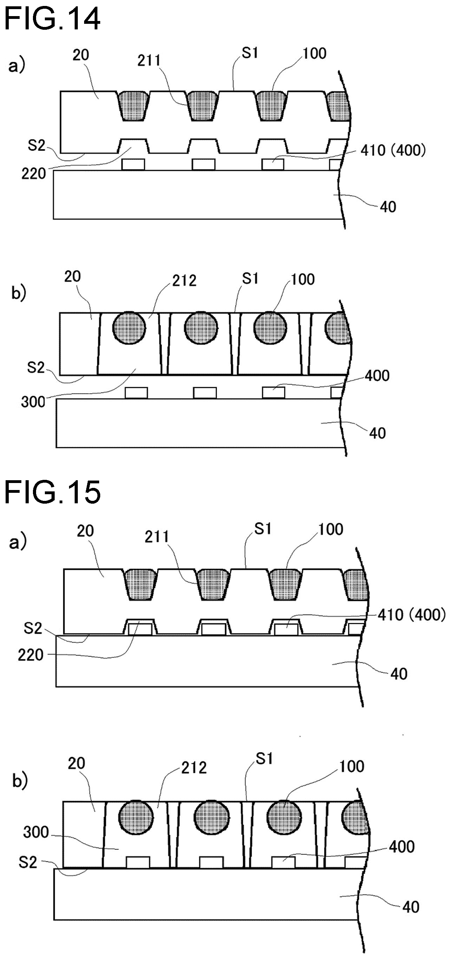

Fig. 14 illustrates an example of a state in which the plate of the cable assembly faces the connection target member. a) of Fig. 14 is a view illustrating a cross section of the first region 211 portion of the groove of the plate 20 along the y axis direction. A line-shaped electrode 400 is provided on the surface of a connection target member 40, and the plate 20 is provided corresponding to this electrode. A linear recess 220 corresponding to this electrode is provided on the second surface S2 of the plate 20 facing the connection target member. A portion 410 (400) of the line-shaped electrode and the recess 220 of the plate can be used for, for example, the purpose of adjusting the position. A protrusion or a recess may be formed at any position on the surface of the connection target member on which the electrode is provided, and a recess or a protrusion corresponding to the surface of the plate facing the connection target member may be formed. b) of Fig. 14 is a diagram illustrating a cross section along the y axis direction of the second region 212 portion of the groove of the plate 20. The second region 212 of the groove of the plate 20 is at a position corresponding to the electrode 400 of the connection target member 40.

Fig. 15 illustrates an example of a state in which the plate of the cable assembly and the electrode of the connection target member are connected. After the conductor of the plate and the plurality of electrodes of the connection target member are provided corresponding to each other as described above, the conductor of the core wire and the electrodes are connected to each other by heating, pressurizing, or the like. a) of Fig. 15 is a diagram illustrating a cross section of the first region 211 portion of the groove of the plate 20 along the y axis direction. The portion 410 of the line-shaped electrode of the connection target member 40 is accommodated in the recess 220 formed on the second surface S2 of the plate, and the positional deviation of the plate can be reduced. b) of Fig. 15 is a diagram illustrating a cross section of the second region 212 portion of the groove of the plate 20 along the y axis direction. When a solder paste is used as the conductive connection material, the solder component is melted by heating the second region 212, and connection can be easily performed. By pressurizing simultaneously with heating, the reliability of connection can be further improved. At this time, in the example in b) of Fig. 15, in the second region 212 of the groove of the plate 20, the wall of the plate formed between the adjacent grooves enters between the adjacent electrodes 400 of the connection target member 40. Accordingly, at least a part of the electrode 400 is located in a region between the first surface S1 and the second surface S2 of the plate 20 in the second region 212 of the groove of the plate 20. The wall formed between the adjacent grooves of the second region 212 can function as a partition wall partitioning the conductor 100 and the electrode as one cell. This structure is expected to have an effect of preventing a short-circuit defect due to solder leakage. When the recess 220 in the extending direction of the electrode is formed as a recess on the surface of the plate 20 facing the connection target member, it is possible to release an excess of the solder component held in the second region of the plate to the recess 220, and an effect of preventing solder leakage between the electrodes can also be expected.

The connecting method including the cable assembly according to the present invention is effective in preventing the occurrence of poor connection due to insufficient supply of the conductive connection material between the electrode surface and the conductor. As the wiring density becomes higher and the pitch becomes finer, the electrode becomes finer, and it becomes difficult to detect the supply state of the conductive connection material in the connection between the electrode and the conductor by appearance inspection. In particular, when the outer diameter of the conductor is larger than the size of the electrode, not only is it impossible to check the fillet shape because the electrode portion is hidden by the conductor, but it is also difficult to supply the conductive connection material to the region hidden by the conductor. As a result, an open failure is likely to occur. In the connecting method including the cable assembly according to the present invention, it is possible to supply a sufficient amount of the conductive connection material between the electrode surface and the conductor, and even in such a case, stable quality connection can be expected.

After the core wire and the electrode of the connection target member are connected, the plate 20 can be removed. As long as the connection portion is not affected, the plate can be removed by heating or deforming the plate. When the plate is removed after the core wire of the cable assembly and the electrode of the connection target member are connected, the surface of the plate facing the connection target member may be the first surface S1 of the plate.

In the cable assembly according to the present invention, when the plate in a state in which the conductive connection material contains the conductor and is cured is connected to the electrode of the connection target member, the plate and the electrode can be further connected via an anisotropic conductive film between the conductor and the electrode. When the anisotropic conductive film is used, the anisotropic conductive film is laminated on the surface of the plate of the cable assembly facing the connection target member, and the plate is provided at a position corresponding to the electrode of the connection target member. The anisotropic conductive film is formed into a film shape by dispersing conductive particles such as fine metal particles in a thermosetting resin as a base, and when pressure is applied while heat is applied in a state in which the sheet is sandwiched between a conductor and an electrode, the conductive particles dispersed in the film approach and come into contact with each other, and only a portion to which the pressure is applied is electrically connected.

When the surface facing the connection target member is the second surface S2 of the plate, the conductor and the electrode of the connection target member are electrically connected via the conductive connection material and the anisotropic conductive film. When the surface facing the connection target member is the first surface S1 of the plate, the conductor and the electrode of the connection target member are connected via only the anisotropic conductive film or via the conductive connection material and the anisotropic conductive film.

The structure of the cable assembly and the connection method therefor according to the present invention have been described, and the cable assembly according to the present invention is manufactured by, for example, the following steps. The steps to be described below are not limited to the described order.

### <Step of Preparing Cable>

As the cable, a cable having a plurality of insulated cables and/or coaxial cables as core wires is prepared. The cable is often a cable having a circular cross section formed by twisting a plurality of core wires or a cable having a flat cross section formed by arranging a plurality of cables in parallel.

### <Step of Exposing Conductor>

The core wires at the end portions of the prepared cables are arranged according to the shape of the plate. The insulators at the end portions of the plurality of core wires are removed, and the conductors are exposed. When a coaxial cable is used as the core wire, the jacket, the shield conductor, and the insulator are removed in this order from the outer periphery of the core wire to expose the conductor.

### <Step of Preparing Plate>

A plate material is prepared. A plurality of grooves including a first region for sandwiching the conductor of the core wire and a second region for holding the conductive connection material are formed. Grooves can be formed in the film serving as the plate material by processing using a laser or the like. The second region of the groove of the processed plate is filled with the conductive connection material, and the excess is removed.

### <Step of Providing Conductor on Plate>

The conductor exposed by removing the insulator of the core wire is provided in the groove formed in the prepared plate.

### <Step of Fixing Conductor to Plate>

The conductor provided in the groove of the prepared plate is pressed from above the plate to fit the conductor and the groove in the first region of the groove of the plate. The conductor is inserted into the conductive connection material in the second region of the groove of the plate to form the cable assembly. In the cable assembly, the plate to which the conductor is fixed may be preheated as necessary to cure the conductive connection material.

### <Step of Connecting Cable Assembly and Electrode of Connection Target Member>

The conductor of the prepared cable assembly is connected to the electrode of the connection target member. When a solder paste is used as the conductive connection material, the second surface of the plate is used as a surface facing the connection target member, and the plate is provided at a position corresponding to the electrode of the connection target member. The conductor and the electrode are electrically and physically fixed via the solder paste by heating and melting the solder paste such that the arrangement of the plate and the electrode is not shifted. The first surface of the plate can also be connected as a surface facing the connection target member.

When the anisotropic conductive film is used for connection, the anisotropic conductive film is laminated on either a first surface or a second surface of the plate, which is a surface facing the connection target member. The plate on which the anisotropic conductive film is laminated is provided at a position corresponding to the electrode of the connection target member. By applying heat and pressure from above the plate, pressure is applied to the anisotropic conductive film sandwiched between the conductor of the core wire fixed to the plate and the electrode on the connection target member, causing conductivity, and the conductor and the electrode are electrically and physically connected via the solder paste and the anisotropic conductive film.

In the method for manufacturing an electronic apparatus using the connection method using the cable assembly according to the embodiment of the present invention, the conductors of the plurality of core wires can be collectively connected to the plurality of electrodes of the connection target member, and wiring excellent in reliability of connection can be performed by a simple method. It is not necessary to provide a connector on a wiring board of an electronic apparatus, and an effect of reducing a wiring space in the electronic apparatus can also be expected. The method for manufacturing an electronic apparatus using the connection method including the cable assembly according to the present invention can be applied to an electronic apparatus requiring miniaturization such as a medical imaging device, a micromachine, a measurement device, and a communication device, and is particularly useful for a medical endoscope, an ultrasonic diagnostic device, and the like.

### EXAMPLES

### (Measurement of Conductor Cross-Sectional Shape of Cable Assembly)

When the cross-sectional shape of the conductor in the groove of the plate of the cable assembly and the conductor exposed region of the core wire is measured, a cross section is created by cutting along the direction (the y axis direction) orthogonal to the extending direction of the conductor and the groove so as to maintain the shape of the measurement location, and the cross section is used as a measurement cross section. For example, the vicinity of the measurement location is covered with a curable resin or the like, and the conductor is cut along the direction orthogonal to the extending direction of the conductor, so that the cross-sectional surface can be created while maintaining the shape. The measurement cross section is measured using a digital microscope or the like. The measurement is performed at a location where the conductor is estimated to be stably fixed to the plate, for example, near the center of the first region of the groove of the plate in the x axis direction and near the center of the second region of the groove in the x axis direction. All of the plurality of conductors fixed to the plate or 20 or more randomly selected conductors are measured.

### <Effective Length W1 of Groove in First Region in Direction (y axis Direction) Orthogonal to Extending Direction of Groove>

The effective length W1 of the groove in the first region in the y axis direction is measured at a portion where an effect of the groove sandwiching the conductor is attained when the groove and the conductor are fitted to each other. In the above-described measurement cross section of the cable assembly, the length of the portion where the length of the groove in the y axis direction is the maximum in the portion where the inner surface of the groove and the conductor are in contact with each other between the first surface and the second surface of the plate is measured and defined as the "effective length W1 in the first region". When the shape of the first region of the groove is a shape in which the length in the y axis direction changes depending on the cutting position, cross sections are created at different positions, and measurement is performed at a plurality of positions (for example, five or more randomly selected positions). An arithmetic mean value of the measured values is defined as W1.

### <Effective Length W2 of Groove in Second Region in Direction (y axis Direction) Orthogonal to Extending Direction of Groove>

Regarding the length of the groove in the second region in the y axis direction, in the above-described measurement cross section of the cable assembly, the length of the second region in the y axis direction between the first surface and the second surface of the plate is measured and defined as the "effective length W2 in the second region". When the shape of the second region of the groove is a shape in which the length in the y axis direction changes depending on the cutting position, cross sections are created at different positions, and measurement is performed at a plurality of positions (for example, five or more randomly selected positions). An arithmetic mean value of the measured values is defined as W2.

Regarding the above-described relationship that the effective length W2 of the second region of the groove in the y axis direction is larger than the effective length W1 of the first region in the y axis direction, when this relationship is satisfied in 50% or more of the grooves whose lengths are measured, the cable assembly is treated as a cable assembly in which the effective length W2 of the second region of the groove in the y axis direction is larger than the effective length W1 of the first region in the y axis direction.

### (Measurement of Area of Second Region of Groove)

The area of the second region of the groove of the plate of the cable assembly is measured on the surface of the plate using a digital microscope or the like. On the plate surface, a region in which the length in the direction orthogonal to the extending direction of the groove is larger than the conductor outer diameter of the conductor exposed region of the core wire is measured as a second region of the groove. The opening area of the second region of the groove is measured for each of the first surface and the second surface of the plate. The area of the second region is measured for all the grooves formed in the plate or 20 or more randomly selected grooves.

Regarding the above-described relationship that the second region of the groove is formed such that the area on the first surface of the plate is smaller or larger than the area on the second surface, when this relationship is satisfied in 50% or more of the groove whose area is measured, the second region of the groove is treated as being formed such that the area on the first surface of the plate is smaller or larger than the area on the second surface.

### <Cross-Sectional Area of Groove of Plate>

The cross-sectional area of the groove of the plate can be measured simultaneously with the measurement of the conductor cross-sectional shape of the cable assembly described above. In the measurement of the cross section created above, the area surrounded by the straight line along the plate surface near the groove and the contour line of the inner surface of the groove of the plate is the cross-sectional area of the groove. When an insulating material such as an adhesive different from the material of the plate body is contained in the groove, the contour line of the material is treated as the contour line of the groove, and the area occupied by the material is excluded from the cross-sectional area of the groove.

### <Interval P of Grooves of Plate>

The interval P between the grooves of the plate can be measured simultaneously with the measurement of the conductor cross-sectional shape of the cable assembly described above. In the measurement of the cross section created above, the distance between the center of the length of the groove in the y axis direction and the center of the length of the adjacent groove in the y axis direction on the straight line along the plate surface near the groove is the interval P of the grooves of the plate. When 50% or more of the measured groove interval P is within a predetermined range, the groove interval P of the plate of the cable assembly is treated as being within the predetermined range.

### Example

Four insulated cables in which the outer periphery of a conductor having an outer diameter of 0.030 mm was covered with an insulator made of PFA were prepared as core wires, and three non-insulated conductors having an outer diameter similar to that of the insulated cables were prepared. The cable was created by providing an insulated cable at the center, and twisting the insulated cables and the non-insulated conductors around the insulated cable in an alternating arrangement. Three cables were used, and 12 core wires (insulated cables) were arranged in parallel. The end portion of the cable was stripped by 3.0 mm to expose the conductor. A polyimide film having a thickness of 125 µm was prepared as a material of the plate, and a groove including a first region and a second region was formed on a first surface of the polyimide film by laser processing. The interval P between the grooves was 0.1 mm. A recess was formed in the second surface of the plate at a position corresponding to the electrode of the connection target member by laser processing.

The second region of the groove was filled with a solder paste having a solder particle diameter of 10 µm to prepare a plate of a cable assembly.

The conductor of the core wire was provided in the groove of the prepared plate, and the plate and the conductor were pressed from above using a small pressing machine to fit the conductor and the first region of the groove. At the same time, the conductor entered the solder paste held in the second region. When the plate and the conductor were pressed from above by the small pressing machine and simultaneously heated, the solder paste was pre-cured and the conductor was fixed to the plate to prepare a cable assembly.

The conductor of the prepared cable assembly was connected to the electrode of the connection target member. The plate of the cable assembly was provided on the connection target member such that the conductor of the core wire corresponds to the electrode using a recess formed on a second surface of the plate, the second surface being a connection surface facing the connection target member. The second region of the plate and the periphery thereof were heated using a welder, and the solder was melted to connect the conductor of the cable assembly and the electrode of the connection target member.

In the cable assembly according to the example, all of the plurality of conductors fixed to the plate can be collectively connected to accurate positions, and an appropriate amount of solder was supplied for the connection, so that an open failure or a short failure did not occur.

The cable assembly according to the present invention can connect the conductors of the plurality of core wires and the electrodes of the connection target member by a simple method with excellent connection reliability. Therefore, in the method for manufacturing an electronic apparatus using the cable assembly according to the present invention, it is possible to perform wiring of the electronic apparatus by a simple method, and it is advantageous in manufacturing an electronic apparatus having high reliability of electrical connection of the wiring of the electronic apparatus. It is not necessary to provide a connector on the wiring board, and an effect of reducing a wiring space in the electronic apparatus is expected. As an electronic apparatus using the connection method including the cable assembly according to the present invention, a high effect is expected particularly in a medical endoscope, an ultrasonic diagnostic apparatus, or the like. The cable assembly according to the present invention is also useful for electronic apparatuses that are required to be downsized, such as other imaging devices, a micromachine, a measurement device, and a communication device.

### EXPLANATIONS OF REFERENCE SIGNS

1: cable assembly
10: core wire
100: conductor
20: plate
210: groove
211: first region of groove
212: second region of groove
220: recess
300: conductive connection material
40: connection target member
400: electrode
S1: first surface
S2: second surface
W1: effective length in first region
W2: effective length in second region
x: extending direction of groove
y: direction orthogonal to extending direction of groove

## Claims

1. A cable assembly including a plate and a cable including a plurality of core wires, the cable assembly being capable of connecting the plurality of core wires to a plurality of electrodes provided on a surface of a connection target member,
wherein the core wire
includes a conductor and an insulator formed on an outer periphery of the conductor, and
has a conductor exposed region in which the conductor is exposed and a conductor covered region having the insulator on the outer periphery of the conductor,
wherein the plate has a first surface and a second surface that have a front and back relationship with each other,
wherein the first surface is formed with a plurality of grooves extending linearly to which the core wire is connected,
wherein the groove has a first region in which at least a part of the conductor exposed region of the core wire is sandwiched and a second region in which a conductive connection material is held,
wherein an effective length W2 in the second region in a direction orthogonal to an extending direction of the groove is larger than an effective length W1 in the first region in the direction orthogonal to the extending direction of the groove, and
wherein the conductor in the conductor exposed region of the core wire is sandwiched in the first region of the groove of the plate and is fixed by the conductive connection material held in the second region.

2. The cable assembly according to claim 1,
wherein the second region of the groove is formed to penetrate from the first surface to the second surface of the plate.

3. The cable assembly according to claim 1,
wherein a recess or a protrusion corresponding to the connection target member is provided on at least one of the first surface and the second surface of the plate.

4. The cable assembly according to claim 3,
wherein the recess of the plate is provided by forming a groove in an extending direction of the electrode at a position corresponding to the electrode of the connection target member.

5. The cable assembly according to claim 1,
wherein an outer diameter of the conductor of the core wire is 0.01 mm to 0.15 mm.

6. A method for manufacturing an electronic apparatus, the method comprising
preparing the cable assembly according to claim 1 and electrically connecting the plurality of core wires to the electrodes of the connection target member.

7. The method for manufacturing an electronic apparatus according to claim 6, further comprising
removing the plate after electrically connecting the plurality of core wires to the electrodes of the connection target member.

8. The method for manufacturing an electronic apparatus according to claim 6, further comprising
connecting, when the plurality of core wires and the electrodes of the connection target member are connected to each other, the core wires and the electrodes of the connection target member such that a portion or an entirety of the electrodes is located between the first surface and the second surface of the plate in the second region of the groove of the plate.

9. The method for manufacturing an electronic apparatus according to claim 6, further comprising
forming a recess in an extending direction of the electrode at a position of the plate corresponding to the electrode of the connection target member, and controlling a relative position between the plate and the connection target member.

10. An electronic apparatus including a cable assembly including a plate and a cable including a plurality of core wires, the cable assembly being capable of connecting the plurality of core wires to a plurality of electrodes provided on a surface of a connection target member, the electronic apparatus comprising:
the cable assembly
in which the core wire includes a conductor and an insulator formed on an outer periphery of the conductor, and has a conductor exposed region in which the conductor is exposed and a conductor covered region having the insulator on the outer periphery of the conductor,
in which the plate has a first surface and a second surface that have a front and back relationship with each other, and the first surface is formed with a plurality of grooves extending linearly to which the core wire is connected,
in which the groove has a first region in which at least a part of the conductor exposed region of the core wire is sandwiched and a second region in which a conductive connection material is held, and
in which an effective length W2 in the second region in a direction orthogonal to an extending direction of the groove is larger than an effective length W1 in the first region in the direction orthogonal to the extending direction of the groove, and the conductor in the conductor exposed region of the core wire is sandwiched in the first region of the groove of the plate and is fixed by the conductive connection material held in the second region; and
the connection target member including the plurality of electrodes to which the plurality of core wires are connected.

11. The electronic apparatus according to claim 11,
wherein the electronic apparatus is a medical endoscope or an ultrasonic diagnostic apparatus.
